# EUROPEAN PATENT APPLICATION

(11) **EP 4 752 942 A1**
(43) Date of publication of application: **03.06.2026**
(21) Application number: 25218179.7
(22) Date of filing: 25.11.2025
(51) Int. Cl.: H01M 4/04, H01M 4/1391, H01M 4/1397, H01M 10/0562, H01M 4/62

(54) **METHOD FOR MANUFACTURING POSITIVE ELECTRODE FOR ALL-SOLID-STATE BATTERY, AND POSITIVE ELECTRODE FOR ALL-SOLID-STATE BATTERY MANUFACTURED USING THE SAME**

(30) Priority: 28.11.2024 KR 20240173065
(71) Applicant: SAMSUNG SDI CO., LTD., Yongin-si, Gyeonggi-do 17084 (KR)
(72) Inventor: AN, Seonhyeok, Yongin-si, Gyeonggi-do 17084 (KR); KIM, Hanseul, Yongin-si, Gyeonggi-do 17084 (KR); KIM, Dongsu, Yongin-si, Gyeonggi-do 17084 (KR)
(74) Representative: Michalski Hüttermann & Partner Patentanwälte mbB

(57) **Abstract**

The present disclosure relates to a method of manufacturing a positive electrode for an all-solid-state battery. The method includes preparing a positive electrode mixture including a positive electrode active material layer, a solid electrolyte, a conductive material, and a fibrous binder, forming a positive electrode active material layer, and attaching the positive electrode active material layer on a current collector. The positive electrode active material layer has a loading level in a range of about 35 mg/cm² to about 100 mg/cm².

## Description

### CROSS-REFERENCE TO RELATED APPLICATIONS

This patent application claims priority of Korean Patent Application No. 10-2024-0173065, filed on November 28, 2024.

### BACKGROUND

The present disclosure relates to a method for manufacturing a positive electrode for an all-solid-state battery, and a positive electrode for an all-solid-state battery, manufactured using the method, and an all-solid-state battery including the positive electrode.

Due to increasing demand, development on batteries having high energy density and stability is actively being conducted. For example, lithium-ion batteries are being commercialized not only in information-related devices and communication equipment fields, but also, e.g., in the automotive field. In the automotive field, safety is relevant because safety is related to preserving human life.

An all-solid-state battery in which an electrolyte solution is replaced with a solid electrolyte is typically suggested. The all-solid-state battery uses no flammable organic dispersant, and thus even when a short circuit occurs, possibilities of fire and explosion may significantly decrease. Therefore, such an all-solid-state battery may increase safety compared to a lithium-ion battery using an electrolyte solution

### SUMMARY

The present disclosure describes a method for manufacturing, by a dry process without using a solvent, a thick positive electrode for an all-solid-state battery. Therefore, processibility and productivity during the manufacturing of an all-solid-state battery may be improved.

The present disclosure also describes a positive electrode for an all-solid-state battery having desired or improved ionic conductivity and capacity.

An example embodiment of the present disclosure may include a method for manufacturing a positive electrode for an all-solid-state battery. The method may include preparing a positive electrode mixture including a positive electrode active material, a solid electrolyte, a conductive material, and a fibrous binder; forming a positive electrode active material layer by calendaring the positive electrode mixture using a plurality of rollers; and attaching the positive electrode active material layer onto one side or both sides of a positive electrode current collector. The positive electrode active material layer attached to one side of the positive electrode current collector may have a loading level in a range of about 35 mg/cm² to about 100 mg/cm².

An example embodiment of the present disclosure may include a positive electrode for an all-solid-state battery including a positive electrode current collector, and a positive electrode active material layer on the positive electrode current collector. The positive electrode active material layer may include a positive electrode active material, a solid electrolyte, a conductive material, and a fibrous binder. A loading level of the positive electrode active material layer is in a range of about 35 mg/cm² to about 100 mg/cm². The positive electrode for an all-solid-state battery may be manufactured by the above-described method.

### BRIEF DESCRIPTION OF THE FIGURES

The accompanying drawings are included to provide a further understanding of the present disclosure, and are incorporated in and constitute a part of this specification. The drawings illustrate example embodiments of the present disclosure and, together with the description, serve to explain principles of the present disclosure. In the drawings:
FIG. 1 is a cross-sectional view of an all-solid-state battery.
FIG. 2 is a plan view of an all-solid-state battery.
FIG. 3 is a flow chart showing processes of a method of manufacturing a positive electrode for an all-solid-state battery, according to an example embodiment of the present disclosure.
FIG. 4 is a conceptual view showing a mixing process in a manufacturing method, according to an example embodiment of the present disclosure.
FIG. 5 is a conceptual view showing a shear mixing process in a manufacturing method, according to an example embodiment of the present disclosure.
FIG. 6 is an enlarged view in which a M1 portion in FIG. 5 is enlarged.
FIG. 7 is a conceptual view showing a calendaring process in a manufacturing method, according to an example embodiment of the present disclosure.
FIG. 8 is a cross-sectional view of a positive electrode for an all-solid-state battery, according to another example embodiment or the present disclosure.
FIG. 9 is an enlarged view in which a M2 portion in FIG. 8 is enlarged.
FIG. 10 and FIG. 11 are each a graph showing performance of a positive electrode for an all-solid-state battery.

### DETAILED DESCRIPTION

In order to sufficiently understand the configuration and effect of the present disclosure, example embodiments of the present disclosure are described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.

In the description, when an element is referred to as being "on" another element, the element can be directly formed on the other element, or intervening elements may be present between therebetween. In addition, in the drawings, thicknesses of some components may be exaggerated for effectively explaining the technical contents. Like reference numerals refer to like elements throughout the specification.

Unless otherwise specially noted in the description, the expression of singular form may include the expression of plural form. In addition, unless otherwise specially noted, the phrase "A or B" may indicate "A but not B," "B but not A," and "A and B." The terms "comprises/includes" and/or "comprising/including" used in the description do not exclude the presence or addition of one or more other components.

In the description, the term "combination thereof" may refer to a mixture, a stack, a composite, a copolymer, an alloy, a blend, or a reaction product.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

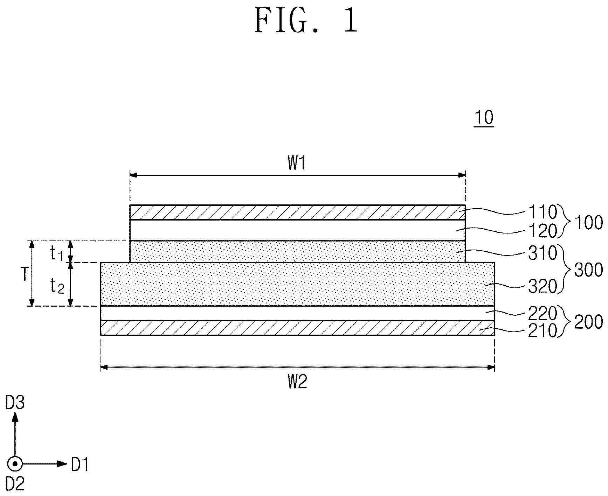

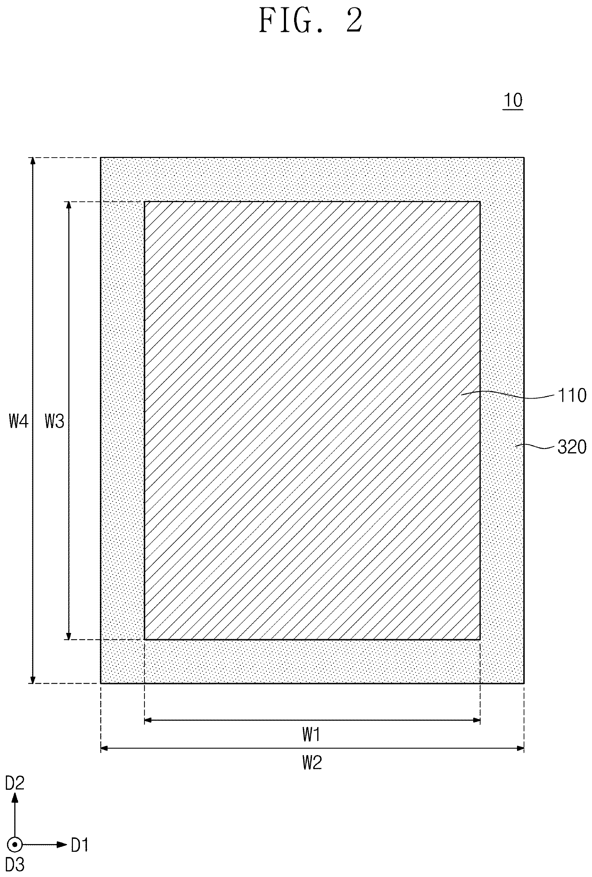

FIG. 1 is a cross-sectional view of an all-solid-state battery. FIG. 2 is a plan view of an all-solid-state battery.

Referring to FIG. 1, an all-solid-state battery 10 may include a positive electrode layer 100, a negative electrode layer 200 facing the positive electrode 100, and a solid electrolyte layer 300 disposed between the positive electrode layer 100 and the negative electrode layer 200. However, an example embodiment of the present disclosure is not limited thereto. The all-solid-state battery 10 may further include an additional functional layer, such as, e.g., an adhesion enhancing layer, disposed between the positive electrode layer 100 and the solid electrolyte layer 300, or between the negative electrode layer 200 and the solid electrolyte layer 300.

The positive electrode layer 100 may include a positive electrode current collector 110 and a positive electrode active material layer 120 disposed on the positive electrode current collector 110. Although not illustrated, the positive electrode active material layer 120 may include a positive electrode active material, a solid electrolyte, a conductive material, and a binder.

The positive electrode current collector 110 may be provide a base substrate on which the positive electrode active material layer 120 is disposed. The positive electrode current collector 110 may include, for example, a plate or a foil containing at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

For example, unlike what is illustrated in FIG. 1, in an example embodiment of the present disclosure, the positive electrode current collector 110 may be omitted. Although not illustrated, in order to increase adhesion between the positive electrode current collector 110 and the positive electrode active material layer 120, a carbon layer having a thickness in a range of about 0.1 µm to about 4 µm may be disposed between the positive electrode current collector 110 and the positive electrode active material layer 120.

The positive electrode active material may include a material capable of reversibly absorbing/desorbing lithium ions. The positive electrode active material may include a plurality of particles. The positive electrode active material may include, for example, at least one of a lithium transition metal oxide such as lithium cobalt oxide (LCO), lithium nickel oxide, lithium nickel cobalt oxide, lithium nickel cobalt aluminum oxide (NCA), lithium nickel cobalt manganese oxide (NCM), lithium manganate, and lithium iron phosphate; nickel sulfide; copper sulfide; lithium sulfide; iron oxide; vanadium oxide; and the like, but is not necessarily limited thereto. The positive electrode active material may each be included alone, or as a mixture of two or more thereof.

The lithium transition metal oxide may be or include, for example, a compound represented by one of any one among LiₐA_{1-b}B_{b}D₂ (where 0.90≤a≤1 and 0≤b≤0.5), LiₐE_{1-b}B_{b}O_{2-c}D_{c} (where 0.90≤a≤1, 0≤b≤0.5, and 0≤c≤0.05), LiE_{2-b}B_{b}O_{4-c}D_{c} (where 0≤b≤0.5 and 0≤c≤0.05), LiₐNi_{1-b-c}Co_{b}B_{c}D_{α} (where 0.90≤a≤1, 0≤b≤0.5, 0≤c≤0.05, and 0<α<2), LiₐNi_{1-b-c}Co_{b}B_{c}O_{2-α}F_{α} (where 0.90≤a≤1, 0≤b≤0.5, 0≤c≤0.05, and 0<α<2), LiₐNi_{1-b-c}Mn_{b}B_{c}D_{α} (where 0.90≤a≤1, 0≤b≤0.5, 0≤c≤0.05, and 0<α≤2), LiₐNi_{1-b-c}Mn_{b}B_{c}O_{2-α}F_{α} (where 0.90≤a≤1, 0≤b≤0.5, 0≤c≤0.05, and 0<α<2), LiₐNi_{b}E_{c}G_{d}O₂ (where 0.90≤a≤1, 0≤b≤0.9, 0≤c≤0.5, and 0.001≤d≤0.1), LiₐNi_{b}Co_{c}Mn_{d}GₑO₂ (where 0.90≤a≤1, 0≤b≤0.9, 0≤c≤0.5, 0≤d≤0.5, and 0.001≤e≤0.1), LiₐNiG_{b}O₂ (where 0.9≤a≤1 and 0.001≤b≤0.1), LiₐCoG_{b}O₂ (where 0.90≤a≤1 and 0.001≤b≤0.1), LiₐMnG_{b}O₂ (where 0.90≤a≤1 and 0.001≤b≤0.1), LiₐMn₂G_{b}O₄ (where 0.90≤a≤1 and 0.001≤b≤0.1), QO₂, QS₂, LiQS₂, V₂O₅, LiV₂O₅, LiIO₂, LiNiVO₄, Li_{3-f}J₂(PO₄)₃ (where 0≤f≤2), Li_{3-f}Fe₂(PO₄)₃ (where 0≤f≤2), and LiFePO₄. In such compounds, the capital letter "A" is or includes at least one of Ni, Co, Mn, or a combination thereof, the capital letter "B" is or includes at least one of Al, Ni, Co, Mn, Cr, Fe, Mg, Sr, V, a rare earth element, or a combination thereof, the capital letter "D" is or includes at least one of O, F, S, P, or combination thereof, the capital letter "F" is or includes at least one of F, S, P, or combination thereof, the capital letter "G" is or includes at least one of Al, Cr, Mn, Fe, Mg, La, Ce, Sr, V, or a combination thereof, the capital letter "Q" is or includes at least one of Ti, Mo, Mn, or a combination thereof, the capital letter "I" is or includes at least one of Cr, V, Fe, Sc, Y, or a combination thereof, and the capital letter "J" is or includes at least one of V, Cr, Mn, Co, Ni, Cu, or a combination thereof.

The positive electrode active material may include, for example, a lithium salt of a transition metal oxide having a layered rock salt type structure among the above-described lithium transition metal oxides. The "layered rock salt type structure" is, for example, a structure in which an oxygen atom layer and a metal atom layer are alternately and regularly arranged in a <111> direction of a cubic rock salt type structure, and thus each atom layer may form a 2-dimensional plain. The "cubic rock-salt structure" refers to a sodium chloride type (NaCl type) structure, which is a type of crystal structure, and for example refers to a structure in which face-centered cubic lattices (fcc) formed by each cation and anion are arranged offset from each other by about 1/2 of a ridge of a unit lattice. The lithium transition metal oxide having such a layered rock salt type structure may be or include, for example, a ternary lithium transition metal oxide such as LiNiₓCo_{y}Al_{z}O₂ (NCA), or LiNiₓCo_{y}Mn_{z}O₂ (NCM) (0<x<1,0<y<1, 0<z<1, and x+y+z=1). When the positive electrode active material includes the ternary lithium transition metal oxide having the layered rock salt type structure, the energy density of the all-solid-state battery 10 may increase and thermal stability may be improved.

The above-described compound included in the positive electrode active material may be covered by a coating layer (not illustrated). As the positive electrode active material, a mixture of the above-described compound and the coating layer-added compound may be included. For example, the coating layer added on a surface of the positive electrode active material may include, for example, an oxide, a hydroxide, an oxyhydroxide, an oxycarbonate, or a hydroxycarbonate of the following coating element. The compound constituting such a coating layer may be amorphous or crystalline. As a coating element included in the coating layer, at least one of Mg, Al, Co, K, Na, Ca, Si, Ti, V, Sn, Ge, Ga, B, As, Zr, or a combination thereof may be included. The coating layer may include, for example, Li₂O-ZrO₂ (LZO), and the like. A method of forming a coating layer may be determined in a range without causing a negative impact on properties of the positive electrode active material. The method of forming a coating layer may include, for example, spray coating, a dipping method, and the like.

When the positive electrode active material includes, for example, a ternary lithium transition metal oxide such as NCA or NCM, which includes Ni, capacity density of the all-solid-state battery 10 increases, and thus metal dissolution of the positive electrode active material may be reduced during a charging state. As a result, cycle characteristics of the all-solid-state battery 10 during the charging state may be improved. The "cycle characteristics" represent a deterioration degree of the all-solid-state battery 10 due to charge/discharge, the all-solid-state-battery 10 with high cycle characteristics may have a smaller deterioration degree of the all-solid-state battery 10 due to charging/discharging, and the all-solid-state battery 10 with low cycle characteristics may have a larger deterioration degree of the all-solid-state battery 10 due to charging/discharging.

The positive electrode active material may have a particle shape of, for example, a sphere, an ellipsoid, and the like. A particle diameter and an amount of the positive electrode active material are not particularly limited. In an example embodiment, the positive electrode active material is in a polycrystal shape, and may include a secondary particle in which at least two primary particles are agglomerated. For example, a secondary particle may include a plurality of primary particles that are agglomerated together. The secondary particle may have a substantially spherical or oval shape.

The solid electrolyte may be dispersed between the positive electrode active materials. The solid electrolyte dispersed between the positive electrode active materials may have a particle shape. The solid electrolyte dispersed between the positive electrode active materials may include a sulfide-based solid electrolyte having desired or improved ionic conductivity. The sulfide-based solid electrolyte may include, for example, at least one of Li₂S-P₂S₅, Li₂S-P₂S₅-LiX (X is a halogen element), (m, n are positive numbers, the capital letter "Z" is or includes one or more of Ge, Zn or Ga), Li₂S-GeS₂, Li₂S-SiS₂-Li₃PO₄, Li₂S-SiS₂-LiₚMO_{q} (p, q are positive numbers, the capital letter "M" is or includes one or more of P, Si, Ge, B, Al, Ga and In), Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2).

The sulfide-based solid electrolyte may be or include an Argyrodite-type compound, for example, including one or more of Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2). For example, the sulfide-based solid electrolyte may be or include an Argyrodite-type compound including one or more of Li₆PS₅Cl, Li₆PS₅Br and Li₆PS₅I. The Argyrodite-type solid electrolyte has a density in a range of about 1.5g/cc to about 2.0g/cc. Since the Argyrodite-type solid electrolyte has density in a range of about 1.5 g/cc or greater, internal resistance of the all-solid-state battery decreases, and defects such as penetration of the solid electrolyte membrane and short circuit due to formation of lithium dendrites may be reduced or prevented. The solid electrolyte may have an elastic modulus in a range of, for example, about 15 Gpa to about 35 GPa.

The solid electrolyte included in the positive electrode active material layer 120 may have a median average particle diameter (D50) that is smaller than a median average particle diameter (D50) of the solid electrolyte included in the solid electrolyte layer 300 to be described below. For example, the median particle diameter (D50) of the solid electrolyte included in the positive electrode active material layer 120 may be equal to about 90% or less, about 80% or less, about 70% or less, about 60% or less, about 50% or less, about 40% or less, about 30% or less, or about 20% or less based on the median average particle diameter (D50) of the solid electrolyte included in the solid electrolyte layer 300. For example, the median average particle diameter (D50) may be a median particle diameter measured using a laser particle size distribution analyzer.

The positive electrode active material layer 120 may include a conductive material. The conductive material exhibits conductivity without causing chemical changes in the all-solid-state battery 10, and thus may increase conductivity of the positive electrode active material and the solid electrolyte. The conductive material may include a carbon-based material. The conductive material may include, for example, one or more of graphite, carbon black, acetylene black, carbon nanofiber, and carbon nanotube,

The positive electrode active material layer 120 may further include a binder. The binder may be configured to bind a positive electrode active material, a solid electrolyte, a conductive material, and the like to each other within the positive electrode active material layer 120. The binder may include a material configured to improve bonding force between the positive electrode active material layer 120 and the positive electrode current collector 110. The binder may include, for example, at least one of polyvinylidene fluoride, styrene butadiene rubber (SBR), a styrene-butadiene rubber, polytetrafluoroethylene, polyvinylidenefluoride, a vinylidene fluoride-hexafluoropropylene copolymer, polyacrylonitrile, poly(methyl methacrylate), and the like.

According to example embodiments of the present disclosure, the binder of the positive electrode active material layer 120 may be or include a binder for a dry process. The binder may be or include at least one of polyvinylidene fluoride, styrene-butadiene rubber (SBR), polytetrafluoroethylene (PTFE), polyvinylidene fluoride, a vinylidene fluoride-hexafluoropropylene copolymer, polyacrylonitrile, poly(methyl methacrylate), and the like, but is not limited thereto.

The positive electrode active material layer 120 may include the positive electrode active material in an amount in a range of about 85 parts by weights to about 92 parts by weights, based on the total parts by weights of the positive electrode active material, the solid electrolyte, the conductive material, and the binder. The positive electrode active material layer 120 may include the binder in an amount in a range of about 0.5 parts by weights to about 1.5 parts by weights, based on the total parts by weights of the positive electrode active material, the solid material, the conductive material, and the binder.

The positive electrode active material layer 120 may include the conductive material in an amount in a range of about 1 part by weight to about 50 parts by weights, based on 100 parts by weights of the solid electrolyte. When the conductive material is included in an amount that is less than about 1 part by weight in the positive electrode active material layer 120 based on 100 parts by weight of the solid electrolyte, a ratio of the conductive material decreases, and thus electrical conductivity of the positive electrode active material layer 120 may be reduced. When the conductive material is included in an amount that is greater than about 50 parts by weight in the positive electrode active material layer 120 based on 100 parts by weight of the solid electrolyte, a ratio of the conductive material is substantially high, and thus the coating layer which covers a surface of the solid electrolyte may not be properly formed.

The positive electrode active material layer 120 may further include an additive such as at least one of a filler, a coating agent, a dispersant, and an ionic conductivity additive, in addition to the positive electrode active material, the solid electrolyte, the conductive material, and the binder.

The negative electrode layer 200 may include a negative electrode current collector 210, and a negative electrode coating layer 220 on the negative electrode current collector 210. The negative electrode current collector 210 may provide a base substrate in which the negative electrode coating layer 220 is disposed. The negative electrode current collector 210 may include a material that substantially does not react with lithium, that is, a material that does not form both an alloy and a compound with lithium. For example, the negative electrode current collector 210 may include at least one metal such as or including at least one of copper (Cu), stainless steel, titanium (Ti), iron (Fe), cobalt (Co), and nickel (Ni). The negative electrode current collector 210 may have a thickness in a range of about 1 µm to about 20 µm, for example about 5 µm to about 15 µm, and for example about 7 µm to about 10 µm.

The negative electrode current collector 210 may be formed using one metal among the above-described metals, or may include an alloy or a coating material of two or more metals. The negative electrode current collector 210 may have, for example, a plate or foil shape. For example, in an example embodiment, the negative electrode current collector 210 may be omitted.

The negative electrode coating layer 220 may allow lithium metal to grow during charging of the all-solid-state battery between the negative electrode coating layer 220 and the negative electrode coating layer. The negative electrode coating layer 220 may constitute a protecting layer of the lithium metal, and may simultaneously or contemporaneously reduce or suppress precipitation and growth of dendrites.

The negative electrode coating layer 220 may include metal and carbon. For example, the negative electrode coating layer 220 may include at least one metal such as or including at least one of gold (Au), platinum (Pt), palladium (Pd), silicon (Si), silver (Ag), aluminum (Al), bismuth (Bi), tin (Sn), and zinc (Zn). The negative electrode coating layer 220 may include at least one carbon such as or including at least one of carbon black, acetylene black, furnace black, Ketjen black, and graphene. In an example embodiment, the negative electrode coating layer 220 may include a mixture of carbon black and silver (Ag).

The negative electrode coating layer 220 may include an additional additive in addition to the metal and carbon. The negative electrode coating layer 220 may further include, for example, at least one additive such as or including at least one of a binder, a filler, a coating agent, a dispersant, and an ionic conductive additive.

The negative electrode coating layer 220 may have a smaller thickness than the positive electrode active material layer 120. The thickness of the negative electrode coating layer 220 may be, for example, in a range of about 50% or less, about 40% or less, about 30% or less, about 20% or less, about 10% or less, or about 5% or less, of a thickness of the positive electrode active material layer 120. The negative electrode current collector 220 may have a thickness in a range of, for example, about 1 µm to about 20 µm, about 2 µm to about 10 µm, or about 3 µm to about 7 µm. When the thickness of the negative electrode coating layer 220 is too thin, lithium dendrites, which are formed between the negative electrode coating layer 220 and the negative electrode current collector 210, may collapse the negative electrode coating layer 220, which may reduce cycle characteristics of the all-solid-state battery 10. When the thickness of the negative electrode coating layer 220 substantially increases, energy density of the all-solid-state battery 10 decreases and internal resistance of the all-solid-state battery increases due to the negative electrode coating layer 220, and thus cycle characteristics of the all-solid-state battery 10 may be reduced.

For example, although not illustrated, a carbon layer may be further included, for improving adhesion, between the negative electrode coating layer 220 and the solid electrolyte layer 300.

The solid electrolyte layer 300 may be provided between the positive electrode layer 100 and the negative electrode layer 200. The solid electrolyte layer 300 may include a sulfide-based solid electrolyte having desired or improved ionic conductivity. The solid electrolyte in the solid electrolyte layer 300 may be the same as, or different from, any one among the materials included in the solid electrolyte in the above-described positive electrode active material layer 120.

The solid electrolyte layer 300 may include a first solid electrolyte layer 310 and a second solid electrolyte layer 320. The first solid electrolyte layer 310 may be adjacent to the positive electrode layer 100, and the second solid electrolyte layer 320 may be adjacent to the negative electrode layer 200.

The second solid electrolyte layer 320 may be directly in contact with the negative electrode coating layer 220. Therefore, the second solid electrolyte layer 320 may reduce or suppress lithium dendrites formed between the negative electrode 220 and the negative electrode current collector 210. The second solid electrolyte layer 320 may effectively reduce or suppress side reactions of the negative electrode. Therefore, the all-solid-state battery 10 according to the present disclosure may have improved cell performance.

The solid electrolyte in the solid electrolyte layer 300 may have a particle shape such as, e.g., a sphere, an ellipsoid.

The solid electrolyte in the solid electrolyte layer 300 may include a sulfide-based solid electrolyte. The solid electrolyte in the solid electrolyte layer 300 may be amorphous, or crystalline, or a mixed state thereof. In addition, the solid electrolyte may be a material including, for example, at least sulfur (S), phosphorous (P), and lithium (Li) as constitutional elements among the above-described sulfide-based solid electrolyte materials. For example, the solid electrolyte may be a material including Li₂S-P₂S₅. When a material including Li₂S-P₂S₅ is included as a sulfide-based solid electrolyte material included in the solid electrolyte, a mixing ratio of Li₂S and P₂S₅ (Li₂S: P₂S₅) is, for example, in a range of about 50 : 50 to about 90: 10.

In an example embodiment, the solid electrolyte in the solid electrolyte layer 300 may be or include an Argyrodite-type compound including Li₇₋ₐMₐPS_{6-c}X_{c}. Herein, X may be or include at least one of Cl, Br, or a combination thereof; M may be or include at least one of Na, K, Fe, Mg, Ca, Ag, Cu, Zr, Zn, or a combination thereof and a and c are each a real number in a range of 0 to 2.

The Argyrodite-type solid electrolyte has density in a range of about 1.5 g/cc to about 2.0 g/cc. Since the Argyrodite-type solid electrolyte has a density of about 1.5 g/cc or greater, internal resistance in the all-solid-state battery decreases, and defects such as penetration of the solid electrolyte membrane and short circuit due to formation of lithium dendrites may be reduced or prevented. The solid electrolyte in the solid electrolyte layer 300 has an elastic modulus in a range of, for example, about 15 Gpa to about 35 GPa.

The solid electrolyte layer 300 may further include a binder. The binder included in the solid electrolyte layer 300 is or includes, for example, at least one of styrene-butadiene rubber (SBR), poly tetrafluoroethylene, polyvinylidene fluoride, polyethylene, and the like, but is not limited thereto. The binder of the solid electrolyte layer 300 may be the same as, or different from, the binder included in the positive electrode active material layer 120, or the binder included in the negative electrode coating layer 220.

Referring back to FIG. 1, the first solid electrolyte layer 310 may have a first thickness t1, and the second solid electrolyte layer 320 may have a second thickness t2. The solid electrolyte layer 300 may have a third thickness T. The first thickness t1 and the second thickness t2 may be different from each other. The second thickness t2 may be greater than the first thickness t1.

The lower the thickness of the solid electrolyte layer 300, the higher the energy density thereof. However, on the contrary, it may be challenging to reduce or suppress the formation of lithium dendrites, which may cause a short circuit.

In the solid electrolyte, a void at an interface between the solid electrolyte and the electrolyte may be generated, which may act as interfacial resistance and lead to deterioration of the battery performance.

The interfacial resistance may be lowered by applying pressure on both the electrode and the solid electrolyte layer. In an example embodiment, since the sulfide-based solid electrolyte has mechanically soft properties and concurrently has a higher ionic conductivity, the all-solid-state battery having improved interfacial resistance may be manufactured by applying pressure.

In an example embodiment of the present disclosure, the positive electrode 120 and the negative electrode 220 may include a pressing procedure during the manufacturing process. In an example embodiment of the present embodiment, during the pressing procedure, different pressures may be applied to each of, or at least one of, the positive electrode layer 120 and the negative electrode layer 220. In an example embodiment of the present embodiment, the positive electrode layer 120 may be manufactured by applying thereto a relatively higher pressure than the negative electrode layer 220. For example, when a nano-scaled particle is included for the positive electrode and negative electrode active materials, a contact area with the solid electrolyte increases, and thus interfacial resistance may be improved. In an example embodiment, the positive electrode active material is in a polycrystal shape to improve adhesion with the electrodes, capacity characteristics, and lifespan characteristics, and may include a secondary particle in which at least two primary particles are agglomerated. In this case, the interfacial resistance between the positive electrode layer 120 and the first solid electrolyte layer 310 may be larger than the interfacial resistance between the negative electrode layer 220 and the second solid electrolyte layer 320, and thus a positive electrode laminate unit may be manufactured by applying higher pressure than the pressure of a negative electrode laminate. However, an example embodiment of the present disclosure is not limited thereto. The positive electrode layer 120 and the negative electrode layer 220 may be manufactured by a pressing process which applies different pressures to each for various reasons.

In an example embodiment of the present disclosure, a process-related issue, which may be caused since the interfacial resistance between the positive electrode layer 120 and the first solid electrolyte layer 310 is different from the interfacial resistance between the negative electrode layer 220 and the second solid electrolyte layer 320, may be addressed or solved by dividing the solid electrolyte 300 into the first solid electrolyte layer 310 and the second solid electrolyte layer 320. For example, a method for manufacturing an all-solid-state battery to be described below may provide an all-solid-state battery manufactured by applying a different pressure to each of the positive electrode laminate and the negative electrode laminate.

In an example embodiment of the present disclosure, the solid electrolyte layer 300 is divided into the first solid electrolyte layer 310 and the second solid electrolyte layer 320, and thicknesses thereof are each adjusted differently, and thus the energy density may increase, and the formation of lithium dendrites in the negative electrode may be reduced or suppressed. Therefore, an all-solid-state battery 10 having a reduced risk of short circuit, improved stability for impact, and high energy density, may be provided.

A ratio (t2/t1) of the second thickness t2 to the first thickness t1 may be in a range of about 1 to about 20. For example, the ratio (t2/t1) of the second thickness t2 to the first thickness t1 may be in a range of about 2 to about 15, about 4 to about 11, or about 4.5 to about 5.5. When the ratio (t2/t1) of the second thickness t2 to the first thickness t1 falls within the above-described range, the formation of lithium dendrites is reduced or suppressed, while the energy density is increased, and thus an all-solid-state battery 10 having a reduced risk of short circuit, improved stability for impact, and high energy density, may be provided.

The first thickness t1 may be in a range of about 30 µm or less. For example, the first thickness t1 may be about 25 µm or less, about 20 µm or less, about 14 µm or less, or about 10 µm or less. The first thickness t1 may also be in a range of about 0.1 µm or greater. For example, the first thickness t1 may be about 1 µm or greater, about 2 µm or greater, about 4 µm or greater, or about 5 µm or greater. When the first thickness t1 exceeds the above-described range, the energy density of the all-solid-state battery 10 may decrease. When the first thickness t1 is less than the above-described range, the first thickness t1 is smaller than a diameter of the active material particle within the positive electrode, and thus formation of an interface may be difficult.

The second thickness t2 may be in a range of about 30 µm or greater. For example, the second thickness t2 may be about 35 µm or greater, about 40 µm or greater, about 45 µm or greater, about 50 µm or v, about 55 µm or greater, or about 60 µm or greater. The second thickness t2 may also be in a range of about 120 µm or less. For example, the second thickness t2 may be about 90 µm or less, about 60 µm or less. When the second thickness t2 is less than the above-described range, it may be challenging to reduce or suppress generation of lithium dendrites in the negative electrode, and thus there may be a risk of short circuit. When the second thickness t2 is greater than the above-described range, the energy density of the all-solid-state battery 10 may decrease.

The third thickness T may be in a range of about 120 µm or less. For example, the third thickness T may be about 90 µm or less, about 60 µm or less. The third thickness T may also be in a range of about 10 µm or greater. For example, the third thickness T may be about 30 µm or greater, about 50 µm or greater. When the third thickness T is greater than the above-described range, the energy density of the all-solid-state battery 10 may decrease.

Referring to FIG. 1 and FIG. 2, an area of the positive electrode layer 100 and an area of the negative electrode layer 200 may be different from each other. For example, the area of the negative electrode layer 200 may be larger than the area of the positive electrode layer 100. The positive electrode layer 100 may be substantially completely overlapped within the negative electrode layer 200.

In an example embodiment, the first solid electrolyte layer 310 may have substantially the same area as the positive electrode layer 100. In an example embodiment, the second solid electrolyte layer 320 may have substantially the same area as the negative electrode layer 200.

Referring to FIG. 1 and FIG. 2, the first solid electrolyte layer 310 may have a first width W1 in a first direction D1. The second solid electrolyte layer 320 may have a second width W2 in the first direction D1. The first width W1 may be smaller than the second width W2.

A difference between the second width W2 and the first width W1 may be about 10 mm or less. For example, the difference between the second width W2 and the first width W1 may be in a range of about 8 mm or less, about 5 mm or less, or 3 mm or less. The difference between the second width W2 and the first width W1 may also be in a range of about 0.1 mm or greater, about 0.5 mm or greater, or about 1 mm or greater. When the difference exceeds the above-described range, a size of the positive electrode layer 100 becomes relatively smaller, and thus discharge capacity may be reduced and the energy density of the all-solid-state battery 10 may decrease. When the difference is less than the above-described range, it may be challenging to reduce or suppress generation of lithium dendrites in the negative electrode, and thus there may be a risk of short circuit.

A ratio (W2/W1) of the second width W2 to the first width W1 may be in a range of about 1 to about 1.6. For example, the ratio (W2/W1) of the second width W2 to the first width W1 may be about 1 to about 1.5, about 1 to about 1.4, about 1 to about 1.3, about 1 to about 1.2, or about 1 to about 1.1.

When the ratio (W2/W1) of the second width W2 to the first width W1 exceeds the above-described range, the energy density of the all-solid-state battery 10 may decrease.

Referring to FIG. 1 and FIG. 2, the first solid electrolyte layer 310 may have a third width W3 in a second direction D2. The second solid electrolyte layer 320 may have a fourth width W4 in the second direction D2. The third width W3 may be smaller than the fourth width W4.

A difference between the third thickness W3 and the fourth width W4 may be in a range of about 10 mm or less. For example, the difference between the third width W3 and the fourth width W4 may be about 8 mm or less, about 5 mm or less, or 3 mm or less. The difference between the fourth width W4 and the third width W3 may also be in a range of about 0.1 mm or more, about 0.5 mm or more, or 1 mm or more. When the difference exceeds the above-described range, a size of the positive electrode layer 100 becomes relatively smaller, and thus discharge capacity may be reduced and the energy density of the all-solid-state battery 10 may decrease. When the difference is less than the above-described range, it may be challenging to reduce or suppress generation of lithium dendrites in the negative electrode, and thus there may be a risk of short circuit.

A ratio (W4/W3) of the fourth width W4 to the third width W3 may be in a range of about 1 to about 1.6. For example, the ratio (W4/W3) of the fourth width W4 to the third width W3 may be in a range of about 1 to about 1.5, about 1 to about 1.4, about 1 to about 1.3, about 1 to about 1.2, or about 1 to about 1.1.

When the ratio (W4/W3) of the fourth width W4 to the third width W3 exceeds the above-described range, the energy density of the all-solid-state battery 10 may decrease.

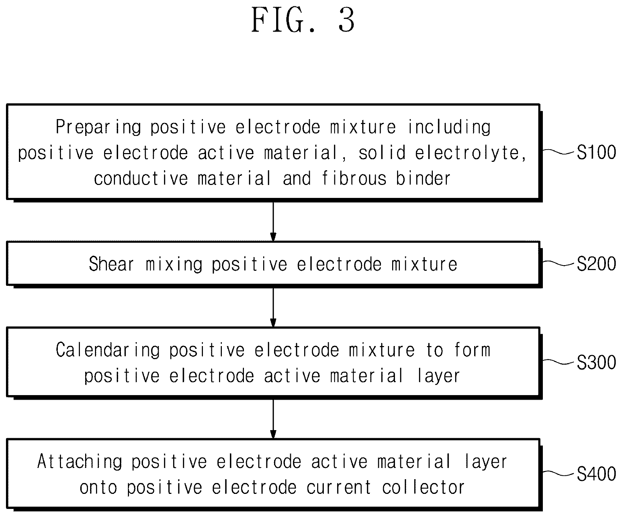

FIG. 3 is a flow chart illustrating processes of a method for manufacturing a positive electrode for an all-solid-state battery according to an example embodiment of the present disclosure. Referring to FIG. 3, a method for manufacturing a positive electrode for an all-solid-state battery may include preparing a positive electrode mixture including a positive electrode active material, a solid electrolyte, a conductive material, and a fibrous binder (S100), shear mixing the positive electrode mixture (S200), forming a positive electrode active material layer by calendaring the positive electrode mixture using a plurality of rollers (S300), and attaching the positive electrode active material layer onto a positive electrode current collector (S400).

Preparing the positive electrode mixture including the positive electrode active material, the solid electrolyte, the conductive material, and the fibrous binder (S100) may be performed by using, e.g., a blender. The positive electrode active material, the solid electrolyte, and the conductive material may be substantially the same as, or similar to, the positive electrode active material, the solid electrolyte, and the conductive material described in FIG. 1 and FIG. 2. Hereinafter, differences therewith are mainly described.

The positive electrode mixture may be mixed under a dry condition without a solvent. In addition, the positive electrode mixture may include a small amount of solvent, for example, the solvent may be included in an amount that is less than about 0.1 ppm. The dry conditions may be conditions in which no solvent is included at all. The positive electrode mixture manufactured under dry conditions may reduce or suppress deteriorating reaction with the sulfide-based solid electrolyte. The sulfide-based solid electrolyte may react with moisture and a solvent, by which deterioration thereof may be easily caused. Therefore, the positive electrode for the all-solid-state battery may have desired or improved ion conductivity.

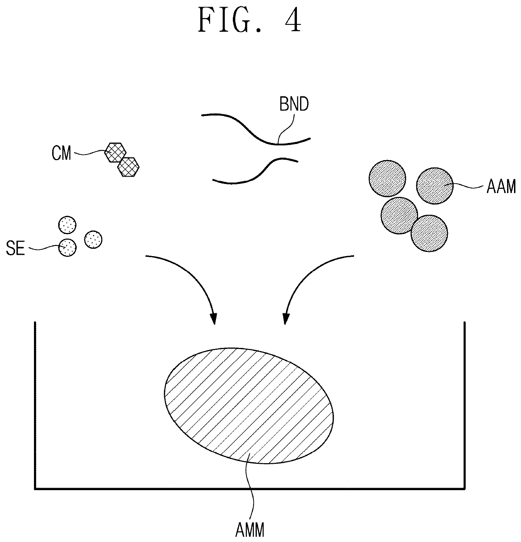

Preparing the positive electrode mixture according to an example embodiment of the present disclosure may include mixing a positive electrode active material in a powder form, a solid electrolyte, a conductive material, and a fibrous binder. This is described in detail in FIG. 4.

Shear mixing the positive electrode mixture (S200) may finely fibrillate the fibrous binder, and may mix or disperse the positive electrode mixture, which is mixed in a powder form.

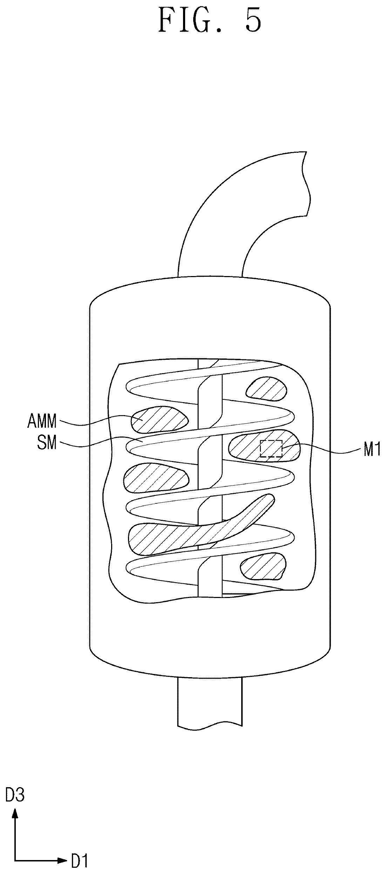

The shear mixing process may refer to a process in which high shear stress accelerates fibrilization of the fibrous binder included in the positive electrode mixture to enable micro-fibrillation, and the micro-fibrillated binder includes intertwined fibers, forming the positive electrode mixture into a type of mass having elasticity and ductility. In this case, high shear stress may also achieve a more uniform dispersion of the positive electrode mixture. The shear mixing process is described in more detail in FIG. 5 to be described below.

Forming the positive electrode active material layer by calendaring the positive electrode mixture using a plurality of rollers (S300) may render a thickness of the positive electrode active material layer substantially uniform.

The calendaring may refer to a mechanical process of forming an electrode layer by passing a mass of the positive electrode mixture, which has undergone a shear mixing process and exhibits elasticity and ductility, through two or more rollers in a substantially uniform amount, and a mechanical process of compressing the electrode layer into a thin layer by passing the electrode layer through the rolls. The calendaring process may improve physical properties of the electrode by substantially equalizing the thickness of the electrode layer and adjusting density. The calendaring process may be a process of manufacturing a positive electrode active material layer having high density by compressing the positive electrode mixture. In addition, the calendaring process may increase mechanical strength of the positive electrode active material layer. The positive electrode active material layer having increased mechanical strength may exhibit the effects of reducing or preventing the electrode from being deformed or separated even after multiple charging and discharging cycles.

The calendaring process may exhibit the effects of securing a substantially uniform thickness during manufacturing of the positive electrode active material. By applying pressure with a plurality of rollers to the positive electrode mixture, the positive electrode active material layer having a substantially uniform thickness may be manufactured. In addition, the calendaring process may have the effects of reducing interfacial resistance during the manufacturing of the positive electrode active material layer. Through the calendaring process, a contact area between the solid electrolyte and the positive electrode active material in the positive electrode active material layer is widened, and thus the interfacial resistance may be lowered. By reducing the interfacial resistance between the solid electrolyte and the positive electrode active material, an ion migration pathway within the electrode may be effectively formed.

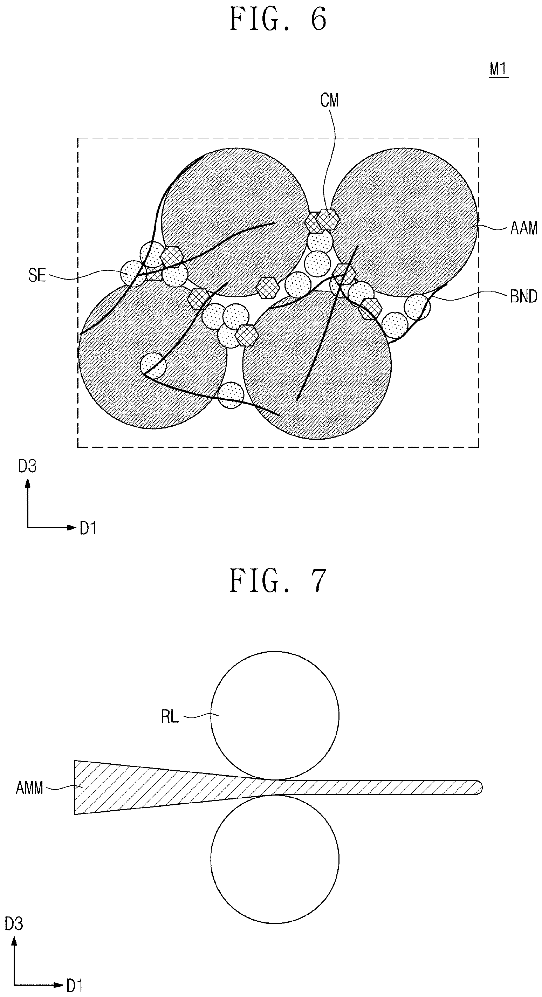

The calendaring process may include the rolling process. The rolling process may be performed by a plurality of rollers. The calendaring process is described in more detail in FIG. 7 to be described below.

Attaching the positive electrode active material layer onto the positive electrode current collector (S400) may be or include attaching the positive electrode active material layer on the positive electrode current collector after completion of the calendaring process. For example, the positive electrode active material layer may be attached onto one side, or both sides, of the positive electrode current collector. The one side of the positive electrode current collector may refer to a top surface or a bottom surface of the positive electrode current collector. That is, the positive electrode active material layer may be attached to at least one side among the top surface and the bottom surface of the positive electrode current collector.

For example, after the calendaring process, attaching the positive electrode active material layer onto the positive electrode current collector may be additionally performed. This is due to the fact that the positive electrode layer may be manufactured under dry conditions. Unlike the above, when the positive electrode layer is manufactured by a wet process, an additional drying process after applying a positive electrode slurry including a solvent onto the positive electrode current collector may have to be performed. That is, when the positive electrode layer is manufactured under dry conditions, the additional drying process may not be performed. When the additional drying process is not performed, the all-solid-state battery may exhibit improved efficiency in the manufacturing process. The above-described positive electrode layer may include the positive electrode current collector and the positive electrode active material layer attached thereto. The positive electrode current collector may be substantially the same as or similar to the positive electrode current collector described in FIG. 1 and in FIG. 2.

The attaching of the positive electrode active material layer to the positive electrode current collector (S400) may be carried out by, e.g., a thermal compression process. The thermal compression process may induce strong adhesion between the positive electrode active material layer and the positive electrode current collector, and may improve mechanical characteristics and electrical characteristics of a positive electrode for an all-solid-state battery.

The thermal compression process may be performed at a temperature in a range of about 50 °C to about 200 °C. In addition, the compression may be performed by using a plurality of rollers. The compression process may be performed by any method that may attach the positive electrode active material layer to the positive electrode current collector, in addition to the compression by a plurality of rollers. When the thermal compression is carried out at a lower temperature than about 50 °C, adhesion between the positive electrode active material layer and the positive electrode current collector may be relatively weak. That is, it may be challenging to attach the positive electrode active material layer onto the positive electrode current collector. When the thermal compression process is carried out at a temperature that is higher than about 200 °C, micro-deformation may be caused on the surface of the positive electrode current collector. The micro-deformation on the surface of the positive electrode current collector may lead to, e.g., a decrease in performance of the battery.

FIG. 4 is a conceptual view showing a mixing process in a manufacturing method, according to an example embodiment of the present disclosure. Referring to FIG. 4, in the mixing process according to an example embodiment of the present disclosure, a positive electrode mixture AMM may be manufactured by mixing a positive electrode active material AAM, a solid electrolyte SE, a conductive material CM, and a fibrous binder BND in a blender.

During the mixing process, no additional solvent may be included. That is, the mixing process may be carried out under dry conditions. The positive electrode mixture mixed by the mixing process may be connected to the fibrous binder BND.

The fibrous binder BND may be or include at least one of polyvinylidene fluoride, styrene-butadiene rubber (SBR), polytetrafluoroethylene (PTFE), polyvinylidene fluoride, a vinylidene fluoride-hexafluoropropylene copolymer, polyacrylonitrile, poly(methyl methacrylate), and the like, but is not limited thereto. In addition, the fibrous binder may be substantially the same as or similar to the binder described above with respect to FIG. 1.

FIG. 5 is a conceptual view showing a shear mixing process in the manufacturing method according to an example embodiment of the present disclosure. Referring to FIG. 5, the shear mixing process may be a mixing process of the positive electrode mixture AMM which is mixed in FIG. 4. The shear mixing process may be performed by a shear member SM. The shear member SM may play a role in shearing the positive electrode mixture AMM. In addition, the shear member SM may be configured to mix the mixture.

During the shear mixing process (S200), the shear member SM may apply a shear force to the positive electrode mixture AMM. Mixing uniformity of the positive electrode mixture AMM may vary depending on the intensity of the shear force.

The shear force may refer to a force that occurs between two parallel surfaces when they move at different speeds. During the shear mixing process, particles may generate friction, and may be substantially uniformly dispersed using the shear force. That is, the shear force may break up agglomeration of the particles and help each particle mix more uniformly. That is, the shear force may ensure that each particle, or the particles, of the positive electrode active material, the solid electrolyte, the conductive material, and the fibrous binder included in the positive electrode mixture is substantially uniformly mixed.

The shear mixing process may have the effects of rearranging powder particles and deagglomerating agglomerates. The rearrangement of powder particles due to the shear mixing process may result in the solid particles being rearranged in position as the solid particles move under the influence of the shear force. During this process, the positive electrode active material AAM, the solid electrolyte SE, the conductive material CM and the fibrous binder BND may be mixed at a substantially uniform ratio. In addition, the rearrangement of the powder particles may help, in the manufacture of a positive electrode for an all-solid-state battery, to achieve a substantially uniform distribution of the conductive pathway and the ion migration pathway, which may increase efficiency of the battery.

The deagglomeration of agglomerates in the shear mixing process may refer to breaking down the agglomerates, in which particles are agglomerated together, by the shear force. The deagglomeration of agglomerates may improve the uniformity of the mixture and increase the contact area between the electrolyte and the electrode.

During the shear mixing process, a kneader, a three roll mill, and the like may be used, but an example embodiment of the inventive concept is not limited thereto.

During the shear mixing process, shear intensity may be expressed as a shear rate and a shear stress.

The shear rate may refer to a value obtained by dividing the speed difference by a distance between two parallel planes when the planes move at different speeds. That is, the shear rate may indicate how quickly a material deforms when subjected to shear force. As the shear rate increases, the material being shear-mixed may deform more quickly. The dry process may need a high shear rate.

The shear mixing process according to an example embodiment of the present disclosure may have a high shear rate. When the shear rate during the shear mixing process is high, particles quickly move and strong bonds therebetween are broken, which may allow the mixing process to be performed more uniformly. In addition, when the shear rate of the shear mixing process is high, the substantially uniform mixing may be performed in a short time. In addition, when the shear rate of the shear mixing process is high, a high shear force may be achieved. Additionally, when the shear rate is high during the shear mixing process, the uniformity of the positive electrode active material, solid electrolyte, conductive material, and fibrous binder in the electrode may be improved, which may improve battery performance.

In the shear mixing process according to an example embodiment of the present disclosure, the shear rate may be in a range of about 1000 s⁻¹ to about 10000 s⁻¹. When the shear rate is smaller than 1000 s⁻¹, during the shear mixing process, an interparticle frictional force may be reduced. That is, when the shear rate is smaller than 1000 s⁻¹, uniform mixing among the particles of the positive electrode mixture may not be appropriately performed.

The particles may undergo strong shear mixing as the shear stress increases. That is, the shear stress is a value obtained by dividing a shear force by an area, and may represent intensity of the shear force applied to the particles. In addition, the shear stress may refer to a shear force applied to a specific area of the particles. When the shear stress is high, it may be easier to break the bonds between solid particles. In addition, when shear stress is high, the shear stress may be effective in compressing the material and increasing the density thereof. That is, when the shear stress is high, the shear mixing process may promote substantially uniform mixing between materials, which may increase or optimize the performance of the electrode.

In the shear mixing process according to an example embodiment of the present disclosure, the shear stress may be in a range of about 0.5 MPa to about 10000 MPa. When the shear stress is smaller than about 0.5 Mpa, the mixing and the dispersion of the positive electrode active material may be non-uniformly performed.

FIG. 6 is an enlarged view in which the "M1" portion in FIG. 5 is enlarged. Referring to FIG. 6, the positive electrode active material mixture may include a positive electrode active material AAM, a solid electrolyte SE, a conductive material CM, and a fibrous binder BND. As described in FIG. 6, the solvent may not be included in the positive electrode mixture. In addition, as described in FIG. 6, the positive electrode active material AAM, the solid electrolyte SE, and the conductive material CM may be substantially uniformly mixed. This may be due to the fact that the positive electrode mixture is substantially uniformly mixed by the shear mixing process described above with respect to FIG. 4 and FIG. 5. The fibrous binder included in the positive electrode mixture may be or include at least one of polyvinylidene fluoride, styrene-butadiene rubber (SBR), polytetrafluoroethylene (PTFE), polyvinylidene fluoride, a vinylidene fluoride-hexafluoropropylene copolymer, polyacrylonitrile, poly(methyl methacrylate), and the like, but is not limited thereto. In addition, the fibrous binder may be substantially the same as or similar to the binder described in FIG.1.

FIG. 7 is a conceptual view showing a calendaring process in a manufacturing method according to an example embodiment of the present disclosure. As described in FIG. 3, the calendaring may include the rolling.

The rolling may refer to a process where pressure is applied to the positive electrode mixture AMM using a plurality of rollers RL. The rolling may be performed, e.g., once to 4 times. In addition, the rolling may be performed more than 4 times, but is not necessarily limited thereto.

The rolling process may be performed in a pressure range of about 20 MPa to about 50 MPa. When the rolling is carried out under a pressure below about 20 Mpa, mechanical strength of the positive electrode active material layer may be poor. In addition, when the rolling is carried out under a pressure below about 20 Mpa, interfacial resistance between the positive electrode active material and the solid electrolyte of the positive electrode active material layer may increase. When the rolling is carried out at a higher pressure than about 50 Mpa, cracks of the solid electrolyte may be induced due to substantially high pressure during the calendaring process. The cracks of the electrode may lead to performance degradation of the all-solid-state battery.

The rolling process may be performed at a temperature range of about 50 °C to about 200 °C. When the rolling process during the calendaring is performed at a lower temperature than about 50 °C, mechanical deformation in the manufacturing of the positive electrode active material layer may not be easily achieved. When the mechanical deformation is not easily achieved, rolling with higher pressure may be needed. When the rolling with higher pressure is carried out, cracks on the electrode may be caused.

When the rolling process is performed at a higher temperature than about 200 °C during the calendaring, damage to the materials included in the positive electrode mixture may be caused. That is, when the rolling process is performed at a high temperature range, damage to the positive electrode active material, the solid electrolyte, the conductive material and the fibrous binder may be caused. The damage on the materials included in the positive electrode mixture may lead to a decrease in performance of the battery.

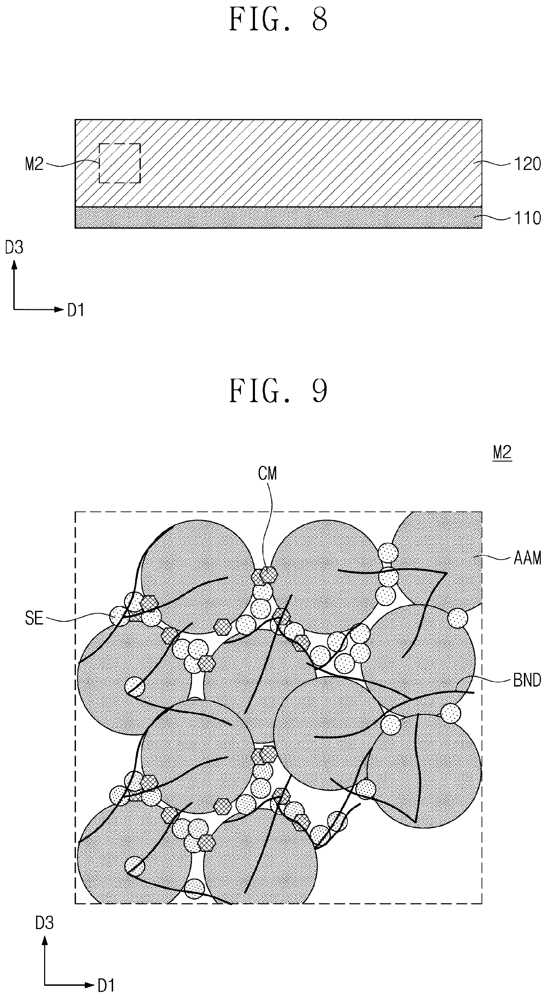

FIG. 8 is a cross-sectional view of a positive electrode for an all-solid-state battery according to another example embodiment of the present disclosure. Referring to FIG. 8, in the positive electrode for an all-solid-state battery, a positive electrode active material layer 120 may be disposed on a positive electrode current collector 110. That is, the positive electrode active material layer 120 may be disposed in a first direction of the positive electrode current collector 110. The attaching of the positive electrode active material layer 120 on the positive electrode current collector 110 may be performed by the above-described thermal compression process described above with respect to FIG. 3. The positive electrode active material layer 120 and/or positive electrode current collector 110 in FIG. 8 may be substantially the same as, or similar to, the positive electrode active material layer 120 and the positive electrode current collector 110 described above with respect to FIG. 1.

A loading level of the positive electrode active material layer 120 may be in a range of about 25 mg/cm² to about 100 mg/cm². In addition, the loading level of the positive electrode active material layer 120 may be about 25 mg/cm² to about 80 mg/cm², about 35 mg/cm² to about 80 mg/cm² or about 35 mg/cm² to about 55 mg/cm².

The loading level may refer to the degree to which the positive electrode material is thickly or heavily coated in the positive electrode for an all-solid-state battery. For example, the loading level may indicate an amount of the positive electrode active material included in the electrode. As the loading level increases, a greater amount of active material may be included per unit area. In addition, as the loading level increases, energy density of the battery may increase. For example, when the loading level is substantially high, the ionic conductivity and/or electrical conductivity of the battery may decrease. In addition, when the loading level is substantially high, the performance of the battery may be lowered. For example, when the loading level exceeds about 60 mg/cm², the performance of the battery may be lowered.

The positive electrode active material layer 120 manufactured under the dry conditions, according to an example embodiment of the present disclosure, may not exhibit a decrease in the ionic conductivity even as the loading level increases. In addition, the positive electrode active material layer 120 manufactured according to an example embodiment of the present disclosure may not exhibit a decrease in the ionic conductivity even in a thick electrode plate having a loading level in a range of about 35 mg/cm² or greater. In addition, the positive electrode active material layer 120 manufactured according to an example embodiment of the present disclosure may not exhibit a decrease in performance of a battery even using a thick electrode plate having a loading level in a range of about 35 mg/cm² or greater.

A positive electrode active material layer manufactured by a wet process may be subject to an additional high temperature dry process. The positive electrode active material layer manufactured by the wet process may have a reduced ionic conductivity due to a reaction of the solvent with the sulfide-based solid electrolyte. Therefore, the positive electrode active material layer manufactured by a wet process may have a reduced ionic conductivity as the loading level increases. In addition, the battery including the positive electrode active material layer manufactured by a wet process may exhibit a decrease in performance as the loading level increases.

FIG. 9 is an enlarged view in which the "M2" portion illustrated in FIG. 8 is enlarged. Referring to FIG. 9, the positive electrode active material layer 120 may include a positive electrode active material AAM, a solid electrolyte SE, a conductive material CM, and a fibrous binder BND. The positive electrode active material AAM, the solid electrolyte SE, the conductive material CM, and the fibrous binder BND may be substantially uniformly dispersed within the positive electrode active material layer 120 (FIG. 8). This is due to a high shear rate during the shear mixing process described above with respect to FIG. 5. In addition, the substantially uniform dispersion is due to high shear stress during the shear mixing process. Referring to FIG. 6 and FIG. 9, a distance between the positive electrode active material AAM in FIG. 9 may be smaller than the distance therebetween illustrated in FIG. 6. This difference is due to the rolling process in the calendaring process described in FIG. 7. Therefore, adhesion of the mixture included in the positive electrode active material layer manufactured after the calendaring process may increase.

The method for manufacturing a positive electrode for an all-solid-state battery may include manufacturing a positive electrode for an all-solid-state battery under dry conditions. By using the manufacturing method according to examples of the present disclosure, it is possible to reduce or prevent a decrease in ionic conductivity of the battery even when the loading level of the positive electrode active material layer is in a range of about 35 mg/cm² or greater. That is, performance of the all-solid-state battery may be improved.

### Example 1 (Preparation of Positive electrode active mixture)

As a solid electrolyte, Li₆PS₅Cl(D50 = 1.0 µm, crystalline), which is an Argyrodite type crystal structure, was prepared. The positive electrode active material and the solid electrolyte were prepared such that a weight ratio of positive electrode active material: solid electrolyte is about 90: 10. As the conductive material, a carbon-based conductive material (for example, carbon black) was used, and as the binder PTFE was prepared. A positive electrode active material, a solid electrolyte, a conductive material, and a fibrous binder were mixed to prepare a positive electrode mixture. The positive electrode mixture was obtained by dry mixing using a mixer.

### Shear mixing process:

Uniformity of the positive electrode mixture was increased through a shear mixing process. The process was carried out under conditions of a shear rate of about 1500 s¹ and shear stress of about 0.5 MPa. The shear mixing allows more even distribution of particles in the mixture and increases or optimizes contact of the solid electrolyte with the active material.

### Calendaring:

The shear mixed-positive electrode mixture was rolled into a positive electrode active material layer using calendaring equipment. In this case, a pressure of the rolling process was set to about 30 Mpa, and the rolling process was performed at about 120 °C. The calendaring process is an important stage for maintaining a uniform thickness of the positive electrode layer and adjusting density, and it was adjusted for the final loading level to reach about 25 mg/cm².

### Thermal compression of positive electrode active material layer:

The calendared positive electrode active material layer was located on the positive electrode current collector (for example: aluminum foil) to perform a thermal compression process. The thermal compression was performed at about 200 °C, by which the positive electrode active material layer and the current collector were strongly bonded.

### Example 2

Except for the loading level being 40 mg/cm², the positive electrode active material layer was prepared in the same manner as in Example 1.

### Example 3

Except for the loading level being 50 mg/cm², the positive electrode active material layer was prepared in the same manner as in Example 1.

### Comparative Example 1

### Preparation of Positive electrode active material:

As a solid electrolyte, Li₆PS₅Cl(D50 = 1.0 µm, crystalline), which is an Argyrodite type crystal structure, was prepared. The positive electrode active material and the solid electrolyte were prepared such that a weight ratio of positive electrode active material: solid electrolyte is about 90: 10. As the conductive material, a carbon-based conductive material (for example, carbon black) was used, and as the binder PTFE was prepared. A positive electrode active material, a solid electrolyte, a conductive material, and a binder were mixed to prepare a positive electrode mixture. A solvent having low polarity was used. The positive electrode mixture in a slurry form was stirred for a sufficient period to uniformly distribute each component.

### Coating:

The manufactured positive electrode slurry was applied onto a surface of the current collector (for example, aluminum foil). In this process, the positive electrode slurry was applied in a uniform thickness according to setting of an applicator, which is adjusted to achieve a loading level of about 35 mg/cm², which is a target loading level of the positive electrode.

### Drying:

The solvent was evaporated from the applied slurry through the dry process. The dry was performed in temperatures between about 80 °C to about 120 °C. In this stage, the solvent was completely evaporated to form a positive electrode for an all-solid-state battery.

### Comparative Example 2

Except for the loading level being 30 mg/cm², the positive electrode active material layer was prepared in the same manner as in Comparative Example 1.

### Comparative Example 3

Except for the loading level being 50 mg/cm², the positive electrode active material layer was prepared in the same manner as in Comparative Example 1.

### Evaluation Example 1: Evaluation of specific capacity of positive electrode

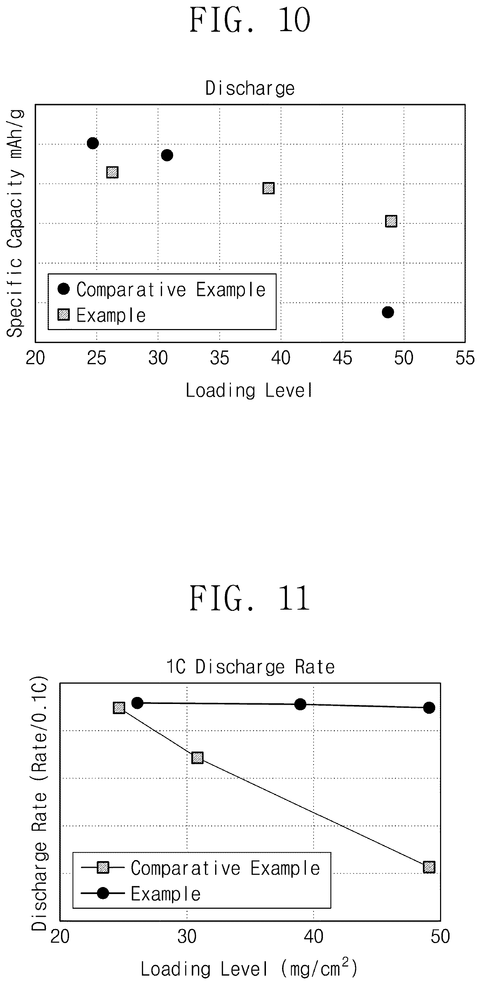

The positive electrodes manufactured respectively according to Examples 1 to 3, and Comparative Examples 1 to 3 were connected to a charge and discharge tester and were subject to a discharge test. During the discharging process, each battery was discharged at a constant C-rate, and current and voltage data were recorded until the end of the discharge. During this process, the amount of electricity discharged by the battery was measured. FIG. 10 shows a graph of the measured data.

### Evaluation Example 2: Evaluation of charge and discharge rate

For the all-solid-state batteries using the positive electrodes respectively manufactured in Examples 1 to 3, and Comparative Examples 1 to 3, charging and discharging characteristics were evaluated by conducting the following charge and discharge test.

The charge and discharge test was conducted by placing the all-solid-state battery in a constant temperature chamber at about 45 °C. The charge was carried out at a constant current (CC). The battery was charged at about 0.05 C to a voltage of about 2.8 V, and was discharged in a CC mode at about 0.05 C to about 1.0 V.

The charge capacity and discharge capacity of the first cycle were measured while conducting one charge and discharge test using the method described above. FIG. 11 shows a graph of the measured data.

Referring to FIG. 10, the batteries respectively manufactured according to Examples 1 to 3 by a dry process have an desired or improved specific capacity compared to the batteries respectively manufactured according to Comparative Examples 2 and 3 by a wet process. Particularly, when the loading level is about 35 mg/cm² or more, the batteries respectively manufactured by a wet process, according to Comparative Examples 2 and 3 have a significantly reduced specific capacity.

Referring to FIG. 11, the batteries respectively manufactured according to Examples 1 to 3 by a dry process have an desired or improved charge and discharge rate compared to the batteries respectively manufactured according to Comparative Examples 2 and 3 by a wet process. Particularly, when the loading level is about 35 mg/cm² or greater, the batteries respectively manufactured according to Comparative Examples 2 and 3 by a wet process have a significantly reduced charge and discharge rate.

When using the method of manufacturing a positive electrode for an all-solid-state battery, according to an example embodiment of the present disclosure, a positive electrode for an all-solid-state battery may be manufactured by using a dry method which uses no solvent. The positive electrode for an all-solid-state battery manufactured using such a method may reduce or minimize deterioration of a sulfide-based solid electrolyte, which may improve ionic conductivity. Therefore, processibility and productivity during the manufacture of an all-solid-state-battery may be improved.

The positive electrode for an all-solid-state battery, according to another example embodiment of the present disclosure, may have desired or improved ionic conductivity and capacity.

Herein, although the example embodiments of the present disclosure have been described with reference to attached drawings, the present disclosure may be implemented in other specific forms without changing the technical idea or essential features thereof. Therefore, it should be understood that the example embodiments described above are for illustrative purposes in all respects and not limiting.

## Claims

1. A method for manufacturing a positive electrode (100) for an all-solid-state battery (10), the method comprising the steps:
(S100) preparing a positive electrode mixture (AMM) comprising a positive electrode active material (AAM), a solid electrolyte (SE), a conductive material (CM), and a fibrous binder (BND);
(S300) forming a positive electrode active material layer (120) by calendaring the positive electrode mixture (AMM) using a plurality of rollers (RL); and
(S400) attaching the positive electrode active material layer (120) on one side or on both sides of a positive electrode current collector (110),
wherein the positive electrode active material layer (120) attached on the one side of the positive electrode current collector (110) has a loading level in a range of 35 mg/cm² to 100 mg/cm², the loading level being an amount of positive electrode active material (AAM) per unit area.

2. The method as claimed in claim 1, wherein the positive electrode mixture (AMM) is prepared by mixing the positive electrode mixture (AMM) under a dry condition without a solvent.

3. The method as claimed in claim 1, wherein the positive electrode mixture (AMM) comprises an amount of solvent that is less than 0.1 ppm.

4. The method as claimed in any of claims 1 to 3, wherein calendaring the positive electrode mixture (AMM) comprises a rolling process, wherein the rolling process is performed at a pressure range of 20 MPa to 50 MPa.

5. The method as claimed in any of claims 1 to 4, wherein the step (S400) attaching the positive electrode active material layer (120) on the positive electrode current collector (110) comprises thermally compressing the positive electrode active material layer (120) at a temperature in a range of 50 °C to 200 °C.

6. The method as claimed in any of claims 1 to 5, wherein the solid electrolyte (SE) comprises a sulfide-based solid electrolyte.

7. The method as claimed in any of claims 1 to 6, wherein an amount of the solid electrolyte (SE) is in a range of 5 wt% to 30 wt% based on the total weight of the positive electrode mixture (AMM).

8. The method as claimed in any of claims 1 to 7, wherein the positive electrode active material (AAM) comprises at least one of lithium cobalt oxide (LCO), lithium nickel oxide, lithium nickel cobalt oxide, lithium nickel cobalt aluminum oxide (NCA), lithium nickel cobalt manganate (NCM), lithium manganate, and lithium iron phosphate.

9. The method as claimed in any of claims 1 to 8, wherein an amount of the positive electrode active material (AAM) is in a range of 70 wt% to 95 wt% based on the total weight of the positive electrode mixture (AMM).

10. The method as claimed in any of claims 1 to 9, wherein the fibrous binder (BND) comprises at least one of polyvinyl fluoride, styrene-butadiene rubber (SBR), polytetrafluoroethylene (PTFE), polyvinylidene fluoride, a vinylidene fluoride-hexafluoropropylene copolymer, polyacrylonitrile, and poly(methyl methacrylate).

11. The method as claimed in any of claims 1 to 10, wherein an amount of the fibrous binder (BND) is in a range of 0.5 wt% to 3 wt% based on the total weight of the positive electrode mixture (AMM).

12. The method as claimed in any of claims 1 to 11, wherein an amount of the conductive material is in a range of 0.5 wt% to 3 wt% based on the total weight of the positive electrode mixture.

13. A positive electrode (100) for an all-solid-state battery (10), the positive electrode (100) being preferably manufactured by a method according to any of the previous claims, the positive electrode (100) comprising:
a positive electrode current collector (110); and
a positive electrode active material layer (120) on the positive electrode current collector (110),
wherein the positive electrode active material layer (120) comprises a positive electrode active material (AAM), a solid electrolyte (SE), a conductive material (CM), and a fibrous binder (BND); and
wherein a loading level of the positive electrode active material layer (120) is in a range of 35 mg/cm² to 100 mg/cm², the loading level being an amount of positive electrode active material (AAM) per unit area.

14. The positive electrode (100) as claimed in claim 13, wherein the solid electrolyte (SE) in the positive electrode active material layer (120) comprises a sulfide-based solid electrolyte.

15. The positive electrode (100) as claimed in claims 13 or 14, wherein the fibrous binder (BND) comprises at least one of polyvinylidene fluoride, styrene-butadiene rubber, polytetrafluoroethylene (PTFE), polyvinylidene fluoride, a vinylidene fluoride-hexafluoropropylene copolymer, polyacrylonitrile, and poly(methyl methacrylate).
